(19) Europäisches Patentamt
European Patent Office
Office européen des brevets

(11) **EP 2 565 150 A1**

(12) **EUROPEAN PATENT APPLICATION**
published in accordance with Art. 153(4) EPC

(43) Date of publication:
**06.03.2013 Bulletin 2013/10**

(21) Application number: **10838393.6**

(22) Date of filing: **28.04.2010**

(51) Int Cl.:
**B66F 19/00** *(2006.01)*

(86) International application number:
**PCT/JP2010/057551**

(87) International publication number:
**WO 2011/135689 (03.11.2011 Gazette 2011/44)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **TOYOTA JIDOSHA KABUSHIKI
KAISHA
Toyota-shi,
Aichi-ken, 471-8571 (JP)**

(72) Inventors:
- **ISHII, Daisuke
  Toyota-shi, Aichi 471-8571 (JP)**
- **MIZUNO, Mitsuru
  Toyota-shi, Aichi 471-8571 (JP)**

(74) Representative: **Intès, Didier Gérard André et al
Cabinet Beau de Loménie
158, rue de l'Université
75340 Paris Cedex 07 (FR)**

(54) **SUPPORT ARM**

(57)     A support arm includes a base (10), an intermediate member (40A), a tip end member (40B), a first parallelogram linkage mechanism (20) provided between the base (10) and the intermediate member (40A) and including a first arm (21) and a second arm (22), and a second parallelogram linkage mechanism (30) provided between the intermediate member (40A) and the tip end member (40B) and including a third arm (31) and a fourth arm (32). The first arm (21), the second arm (22), the third arm (31), and the fourth arm (32) are each formed in an L shape.

FIG.5

Printed by Jouve, 75001 PARIS (FR)

# Description

## TECHNICAL FIELD

The present invention relates to a support arm, and particularly to a support arm supporting a charge connector for a hybrid vehicle or the like.

## BACKGROUND ART

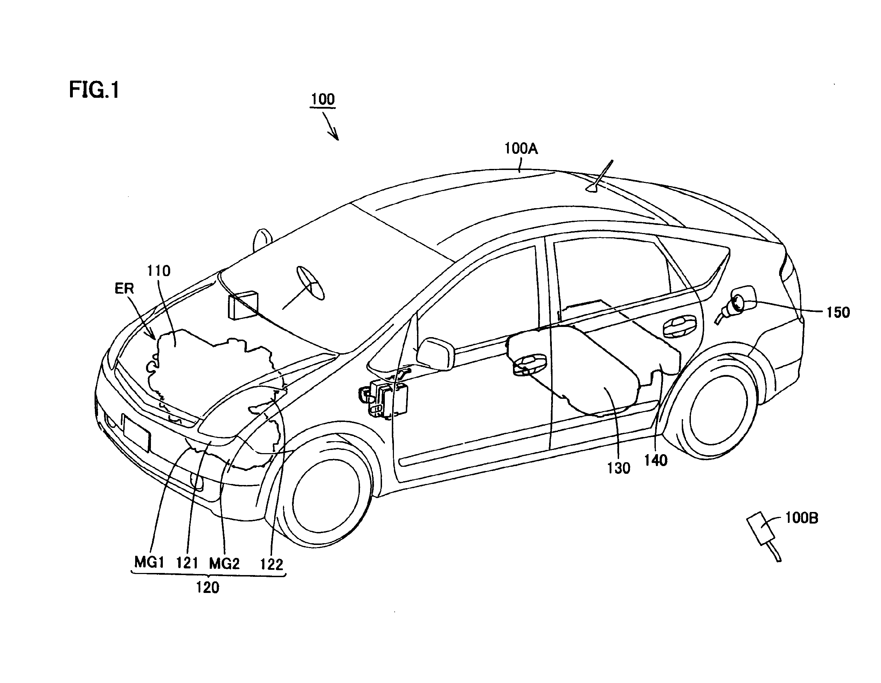

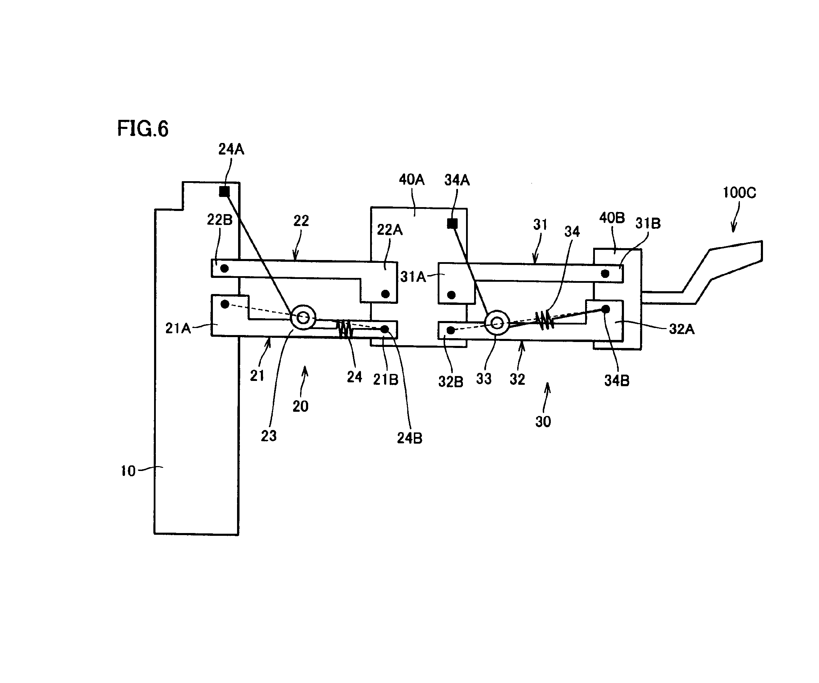

A support arm having a gravity compensation function to keep balance with gravity acting on the arm has conventionally been known. Such an apparatus is described, for example, in Japanese Patent Laying-Open No. 2003-181789 (Patent Literature 1). Patent Literature 1 shows as a conventional mechanism, an apparatus (Fig. 6) in which a parallelogram linkage mechanism is formed by two, upper and lower arms and shows as an embodiment of the invention, an example in which a single arm is provided (Fig. 1 and the like).

In addition, Japanese Patent Laying-Open No. 2003-089090 (Patent Literature 2) shows an arm mechanism having two, upper and lower arms.

## CITATION LIST

## PATENT LITERATURE

PTL 1: Japanese Patent Laying-Open No. 2003-181789
PTL 2: Japanese Patent Laying-Open No. 2003-089090

## SUMMARY OF INVENTION

## TECHNICAL PROBLEM

In a link mechanism having two arms, a movable range is limited due to contact between upper and lower arms. A construction capable of solving this problem is not at all shown in Patent Literatures 1 and 2 above.

Though Patent Literature 1 shows a support arm with a gravity compensation function formed of a single arm, this apparatus is completely different in premise and specific construction from the invention of the subject application premised on a plurality of arms.

The present invention was made in view of the problems as described above, and an object of the present invention is to provide a support arm great in a movable range of an arm.

## SOLUTION TO PROBLEM

A support arm according to the present invention includes a base, an intermediate member, a tip end member, a first parallelogram linkage mechanism provided between the base and the intermediate member and including a first arm and a second arm, and a second parallelogram linkage mechanism provided between the intermediate member and the tip end member and including a third arm and a fourth arm. The first arm, the second arm, the third arm, and the fourth arm are each formed in an L shape. The first arm has a first base portion constructed by a short-side portion of the L shape and pivotably connected to the base and a first tip end portion constructed by a long-side portion of the L shape and pivotably connected to the intermediate member. The second arm has a second base portion constructed by a short-side portion of the L shape and pivotably connected to the intermediate member and a second tip end portion constructed by a long-side portion of the L shape and pivotably connected to the base. The first tip end portion and the second tip end portion are provided to be opposed to the second base portion and the first base portion, respectively. The third arm has a third base portion constructed by a short-side portion of the L shape and pivotably connected to the intermediate member and a third tip end portion constructed by a long-side portion of the L shape and pivotably connected to the tip end member. The fourth arm has a fourth base portion constructed by a short-side portion of the L shape and pivotably connected to the tip end member and a fourth tip end portion constructed by a long-side portion of the L shape and pivotably connected to the intermediate member. The third tip end portion and the fourth tip end portion are provided to be opposed to the fourth base portion and the third base portion, respectively.

In one embodiment, in the support arm above, the first parallelogram linkage mechanism includes a pulley fixed to the first arm or the second arm and an elastic member fixed to the base and the intermediate member. The elastic member is provided to reach a second end portion provided on the intermediate member from a first end portion provided on the base around the pulley. The first arm has an elongated hole formed in the long-side portion of the L shape along a direction in which the long-side portion extends and an adjustment mechanism capable of fixing the pulley to the elongated hole and adjusting a position of the pulley along the elongated hole.

In one embodiment, in the support arm above, the adjustment mechanism includes a guide portion guiding the pulley in a direction of the long side of the L shape when the position of the pulley is to be adjusted.

In one embodiment, in the support arm above, the second parallelogram linkage mechanism includes a second pulley fixed to the third arm or the fourth arm and a second elastic member fixed to the intermediate member and the tip end member. The second elastic member is provided to reach a fourth end portion provided on the tip end member from a third end portion provided on the intermediate member around the pulley. The third arm has a second elongated hole formed in the long-side portion of the L shape along a direction in which the long-side portion extends and a second adjustment mechanism capable of fixing the second pulley to the second elongated hole and adjusting a position of the second pulley along the second elongated hole.

In one embodiment, in the support arm above, the first parallelogram linkage mechanism includes a first elastic member fixed to the base and the intermediate member and a first gravity center adjustment member attached to the first arm or the second arm. The second parallelogram linkage mechanism includes a second elastic member fixed to the intermediate member and the tip end member and a second gravity center adjustment member attached to the third arm or the fourth arm. The first gravity center adjustment member and the second gravity center adjustment member each have a housing and a liquid accommodated in the housing. While the first parallelogram linkage mechanism and the second parallelogram linkage mechanism are horizontal, a position of gravity center of the first elastic member and a position of gravity center of the first gravity center adjustment member coincide with each other in a horizontal direction and a position of gravity center of the second elastic member and a position of gravity center of the second gravity center adjustment member coincide with each other in the horizontal direction.

In one embodiment, in the support arm above, the first gravity center adjustment member is attached to an arm located lower, of the first arm and the second arm, and the second gravity center adjustment member is attached to an arm located lower, of the third arm and the fourth arm.

In one embodiment, in the support arm above, the first gravity center adjustment member and the second gravity center adjustment member are provided movably along a direction of the long side of the L shape.

In one embodiment, the support arm above further includes an accommodation assistance mechanism assisting an operation for accommodating the support arm. The accommodation assistance mechanism includes a weight member connected to the tip end member, a first carrier portion and a second carrier portion each capable of carrying the weight member, and a third carrier portion provided on the second parallelogram linkage mechanism and capable of carrying the weight member. While the support arm is accommodated, the weight member is carried on the first carrier portion. The first parallelogram linkage mechanism and the second parallelogram linkage mechanism enter a horizontal state by moving the weight member from the first carrier portion to the third carrier portion. The support arm enters an accommodated state by moving the weight member from the third carrier portion to the second carrier portion and thereafter further moving the weight member to the first carrier portion.

ADVANTAGEOUS EFFECTS OF INVENTION

According to the present invention, a movable range of an arm in the support arm can be made greater.

BRIEF DESCRIPTION OF DRAWINGS

Fig. 1 is a perspective view when a hybrid vehicle is viewed from one side surface side.
Fig. 2 is a perspective view when the hybrid vehicle shown in Fig. 1 is viewed from the other side surface side.
Fig. 3 is a side view of a charge connector.
Fig. 4 is a front view of a charging portion.
Fig. 5 is a diagram showing a first state of a support arm (an accommodated state) according to one embodiment of the present invention.
Fig. 6 is a diagram showing a second state of the support arm shown in Fig. 5 (a used state).
Fig. 7 is a diagram for illustrating a movable range of a common link mechanism.
Fig. 8A is a diagram (No. 1) for illustrating a first variation of the support arm shown in Figs. 5 and 6.
Fig. 8B is a diagram (No. 2) for illustrating the first variation of the support arm shown in Figs. 5 and 6.
Fig. 9 is a cross-sectional view along IX-IX in Fig. 8A.
Fig. 10 is a cross-sectional view along X-X in Fig. 9.
Fig. 11 is a diagram showing a variation of a guide portion shown in Fig. 10.
Fig. 12 is a diagram for illustrating a second variation of the support arm shown in Figs. 5 and 6.
Fig. 13 is a diagram for illustrating an operation in the second variation shown in Fig. 12.
Fig. 14 is a diagram for illustrating a structure in the second variation shown in Fig. 12.
Fig. 15A is a diagram showing one example of a gravity center adjustment apparatus shown in Fig. 12.
Fig. 15B is a diagram showing a variation of the gravity center adjustment apparatus shown in Fig. 12.
Fig. 16 is a diagram for illustrating a third variation of the support arm shown in Figs. 5 and 6 and showing a first state of the support arm (an accommodated state) according to the variation.
Fig. 17 is a diagram showing a second state of the support arm shown in Fig. 16 (a state in which transition from the accommodated state to a used state is made).
Fig. 18 is a diagram showing a third state of the support arm shown in Fig. 16 (used state).
Fig. 19 is a diagram showing the second state of the support arm shown in Fig. 16 (a state in which transition from the used state to the accommodated state is made).

DESCRIPTION OF EMBODIMENTS

An embodiment of the present invention will be described hereinafter. It is noted that the same or corresponding elements have the same reference characters allotted and description thereof may not be repeated.

It is noted that, when the number, an amount or the like is mentioned in the embodiment described below, the scope of the present invention is not necessarily limited to the number, the amount or the like, unless otherwise specified. In addition, in the embodiment below, each component is not necessarily essential in the present invention, unless otherwise specified.

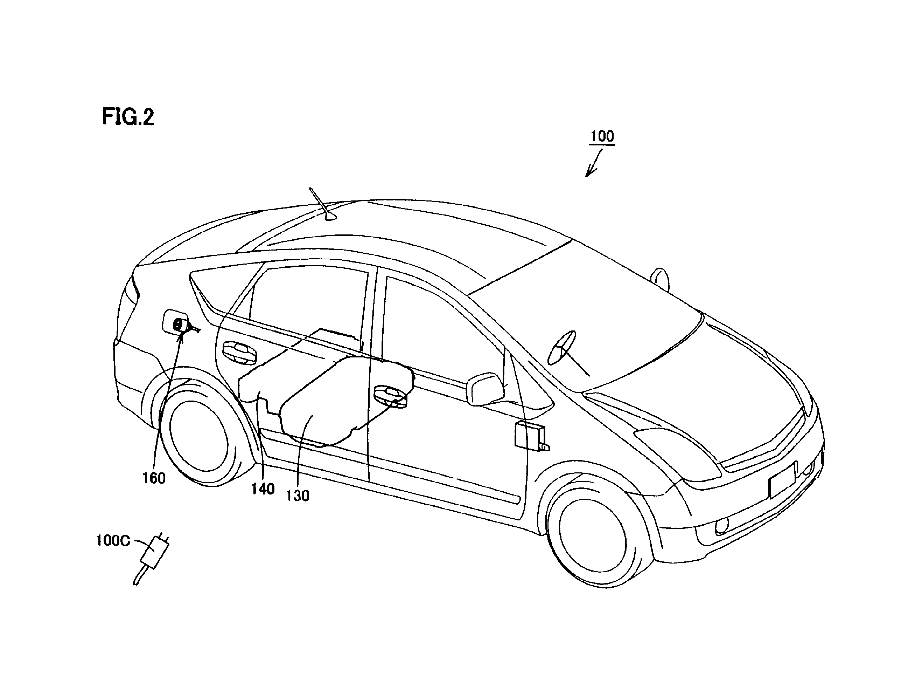

Fig. 1 is a perspective view when a hybrid vehicle 100 according to a first embodiment of the present invention is viewed from one side surface side. Fig. 2 is a perspective view when hybrid vehicle 100 shown in Fig. 1 is viewed from the other side surface side.

As shown in Fig. 1, hybrid vehicle 100 includes a vehicle body 100A formed of a body and exterior parts, an internal combustion engine 110, a transaxle 120, a fuel tank 130, a power storage device 140, and a fuel supply portion 150.

Internal combustion engine 110 is contained in an engine compartment ER. Internal combustion engine 110 generates motive power for driving wheels.

Transaxle 120 is contained in engine compartment ER, together with internal combustion engine 110. Transaxle 120 includes motor generators MG1, MG2, a power split device 121, and a boost converter 122. Motor generators MG1, MG2 drive wheels. Motor generators MG1, MG2 function as a motor and also function as a generator. Power split device 121 is formed of a planetary gear and the like. Boost converter 122 boosts electric power from power storage device 140 and sends the electric power to an inverter (not shown). The inverter converts DC power from boost converter 122 to AC power and supplies the AC power to motor generators MG1, MG2. In addition, the inverter converts AC power supplied from motor generators MG1, MG2 to DC power and supplies the DC power to power storage device 140.

Fuel tank 130 is provided in a portion located under rear seats of a passenger compartment. Fuel tank 130 contains gasoline, ethanol (liquid fuel), propane gas (gaseous fuel), or the like.

Power storage device 140 is arranged on a rear side in a direction of travel, relative to the rear seats. Power storage device 140 is implemented by a fuel cell, a capacitor of a large capacity, or the like.

A fuel supply connector 100B can be connected to fuel supply portion 150. Fuel tank 130 can be replenished with fuel through fuel supply connector 100B and fuel supply portion 150.

Internal combustion engine 110 generates motive power by combusting fuel stored in fuel tank 130. Motor generator MG2 is driven by motive power obtained from internal combustion engine 110 and generates electric power. Electric power generated by motor generator MG2 is supplied through an inverter (not shown) to power storage device 140. Electric power generated by motor generator MG2 is also supplied to motor generator MG 1. Motor generator MG 1 is driven by electric power supplied from power storage device 140 or motor generator MG2 and transmits motive power to a shaft connected to wheels through a differential mechanism or the like.

As shown in Fig. 2, hybrid vehicle 100 further includes a charging portion (fitting portion) 160. A charge connector 100C connected to an external AC power supply can be connected (can removably be attached) to charging portion 160. An internal line is connected to charging portion 160.

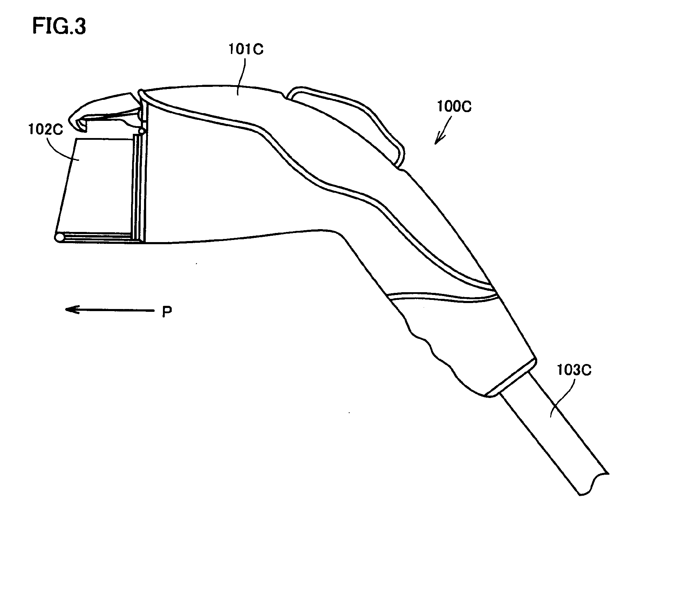

Fig. 3 is a side view of charge connector 100C. As shown in Fig. 3, charge connector 100C includes a main body 101C and a connection portion 102C. An electric power line 103C is connected to main body 101C. Connection portion 102C in charge connector 100C can be fitted to charging portion 160. Power storage device 140 is thus charged.

Connection portion 102C is formed in a cylindrical shape. Connection portion 102C projects from a tip end of main body 101C in a direction of insertion P into charging portion 160.

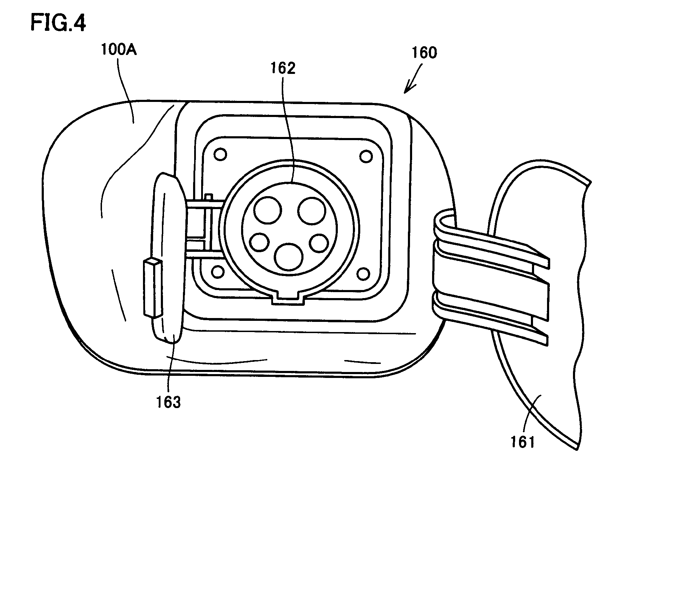

Fig. 4 is a front view of charging portion 160. As shown in Fig. 4, charging portion 160 includes an outer lid 161, a head portion 162, and an inner lid 163. Outer lid 161 opens and closes an opening formed in a rear fender of vehicle body 100A. Head portion 162 is provided in vehicle body 100A. Inner lid 163 covers an end surface of head portion 162.

Head portion 162 is formed in a columnar shape. A plurality of holes receiving respective terminals provided in charge connector 100C and a cylindrical portion are formed in an end surface of head portion 162. As described above, connection portion 102C of charge connector 100C is formed in a hollow cylindrical shape. Thus, connection portion 102C can receive head portion 162. As head portion 162 enters connection portion 102C, each terminal of charge connector 100C enters the hole formed in head portion 162. Charging through charge connector 100C is thus allowed.

The charge connector is supported by a support arm, for example, in order to achieve a gravity compensation function which will be described later. The support arm is folded while it is not in use (during a period in which charging is not performed) and it is extended while it is in use (during a period in which charging is performed). Herein, the folded state during a period in which the support arm is not in use is referred to as an "accommodated state", while the extended state during a period in which the support arm is in use is referred to as a "used state". By thus constructing a support arm to be foldable when it is not in use, the support arm can be installed while making efficient use of a space.

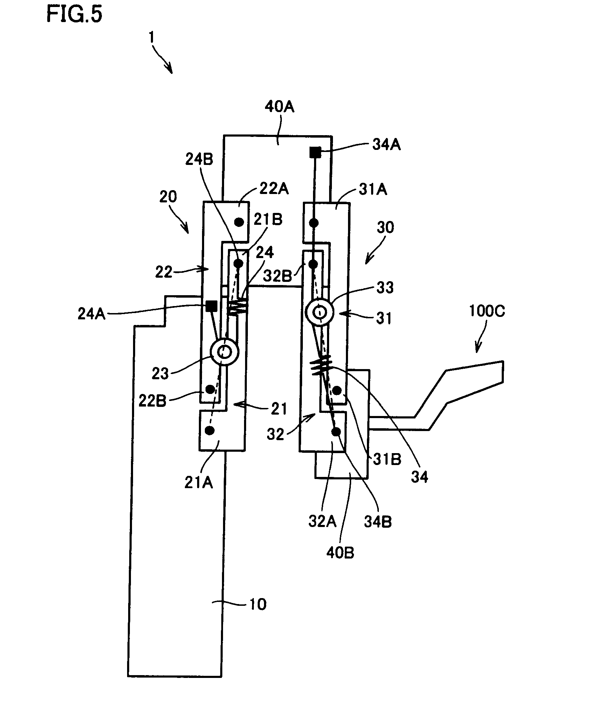

The support arm according to the present embodiment will now be described with reference to Figs. 5 and 6. Fig. 5 shows an accommodated state of the support arm and Fig. 6 shows a specifications state of the support arm.

As shown in Figs. 5 and 6, a support arm 1 according to the present embodiment includes a base 10, a first parallelogram linkage mechanism 20, a second parallelogram linkage mechanism 30, an intermediate member 40A, and a tip end member 40B. Charge connector 100C is fixed to tip end member 40B. Thus, an articulated parallelogram linkage mechanism support arm supporting charge connector 100C is constructed.

The construction of support arm 1 will now be described more specifically with reference to Figs. 5 and 6.

First parallelogram linkage mechanism 20 includes a first arm 21, a second arm 22, a pulley 23, and an elastic member 24.

First arm 21 includes a base portion 21A and a tip end portion 21B. Base portion 21A is pivotably connected to base 10. Tip end portion 21B is pivotably connected to intermediate member 40A.

Second arm 22 includes a base portion 22A and a tip end portion 22B. Base portion 22A is pivotably connected to intermediate member 40A. Tip end portion 22B is pivotably connected to base 10.

First arm 21 and second arm 22 are each formed substantially in an L shape. Base portions 21A, 22A are each constructed by a short-side portion of the L shape, and tip end portion 22B is constructed by a long-side portion of the L shape.

Tip end portion 21B of first arm 21 and base portion 22A of second arm 22 are formed in a manner vertically aligned on intermediate member 40A. A direction of extension of the long-side portion of the L shape of first arm 21 perpendicularly crosses a direction of extension of the short-side portion of the L shape of second arm 22. Then, a tip end of the long-side portion of the L shape of first arm 21 is opposed to the short-side portion of the L shape of second arm 22.

Base portion 21A of first arm 21 and tip end portion 22B of second arm 22 are formed in a manner vertically aligned on base 10. A direction of extension of the long-side portion of the L shape of first arm 21 perpendicularly crosses a direction of extension of the short-side portion of the L shape of first arm 21. Then, a tip end of the long-side portion of the L shape of second arm 22 is opposed to the short-side portion of the L shape of first arm 21.

Thus, in first parallelogram linkage mechanism 20, two L-shaped arms 21, 22 are combined with each other.

Pulley 23 is fixed to first arm 21. Pulley 23 is provided such that the center of pulley 23 is located on a straight line connecting a pivot center of first arm 21 with respect to base 10 (a black circle in Fig. 5) and a pivot center of first arm 21 with respect to intermediate member 40A (similarly, a black circle in Fig. 5) to each other. In order to achieve the gravity compensation function which will be described later, pulley 23 should be located as such.

A wire is connected to opposing sides (opposing ends) of elastic member 24 and the wire is wound around pulley 23. The wire provided on the opposing sides of elastic member 24 is fixed to a fixation portion 24A on base 10 and a fixation portion 24B on intermediate member 40A. Pulley 23 and wire 24 are members for constructing a gravity compensation apparatus which will be described later.

Second parallelogram linkage mechanism 30 includes a third arm 31, a fourth arm 32, a pulley 33, and an elastic member 34.

Third arm 31 includes a base portion 31A and a tip end portion 31B. Base portion 31A is pivotably connected to intermediate member 40A. Tip end portion 31B is pivotably connected to tip end member 40B.

Fourth arm 32 includes a base portion 32A and a tip end portion 32B. Base portion 32A is pivotably connected to tip end member 40B. Tip end portion 32B is pivotably connected to intermediate member 40A.

Third arm 31 and fourth arm 32 are each formed substantially in an L shape. Base portions 31A, 22A are each constructed by a short-side portion of the L shape and tip end portion 32B is constructed by a long-side portion of the L shape.

Tip end portion 31B of third arm 31 and base portion 32A of fourth arm 32 are formed in a manner vertically aligned on tip end member 40B. A direction of extension of the long-side portion of the L shape of third arm 31 perpendicularly crosses a direction of extension of the short-side portion of the L shape of fourth arm 32. Then, a tip end of the long-side portion of the L shape of third arm 31 is opposed to the short-side portion of the L shape of fourth arm 32.

Base portion 31A of third arm 31 and tip end portion 32B of fourth arm 32 are formed in a manner vertically aligned on intermediate member 40A. A direction of extension of the long-side portion of the L shape of third arm 31 perpendicularly crosses a direction of extension of the short-side portion of the L shape of fourth arm 32. Then, a tip end of the long-side portion of the L shape of fourth arm 32 is opposed to the short-side portion of the L shape of third arm 31.

Thus, in second parallelogram linkage mechanism 30, two L-shaped arms 31, 32 are combined with each other.

Pulley 33 is fixed to fourth arm 32. Pulley 33 is provided such that the center of pulley 33 is located on a straight line connecting a pivot center of fourth arm 32 with respect to intermediate member 40A (a black circle in Fig. 5) and a pivot center of fourth arm 32 with respect to tip end member 40B (similarly, a black circle in Fig. 5) to each other. In order to achieve the gravity compensation function which will be described later, pulley 33 should be located as such.

A wire is connected to opposing sides (opposing ends) of elastic member 34 and the wire is wound around pulley 33. The wire provided on the opposing sides of elastic member 34 is fixed to a fixation portion 34A on intermediate member 40A and a fixation portion 34B on tip end member 40B. Pulley 33 and wire 34 are members for constructing a gravity compensation apparatus which will be described later.

A gravity compensation apparatus included in support arm 1 will now be described. When transition from the used state in Fig. 6 (a state where parallelogram linkage mechanisms 20, 30 are horizontal) to a non-use state in Fig. 5 (a state where parallelogram linkage mechanisms 20, 30 are vertical) is made, centers of gravity of first parallelogram linkage mechanism 20, second parallelogram linkage mechanism 30 and intermediate member 40A should be displaced upward against gravity acting on first parallelogram linkage mechanism 20, second parallelogram linkage mechanism 30 and intermediate member 40A. Then, by providing a mechanism for canceling such gravity, transition from the used state to the accommodated state can be made with small force. This is gravity compensation intended in the present embodiment.

As described above, first parallelogram linkage mechanism 20 and second parallelogram linkage mechanism 30 each have a structure in which two L-shaped arms are combined with each other. By thus constructing a link including two arms, a structure of lighter weight and higher durability than a support arm including a single arm can be obtained.

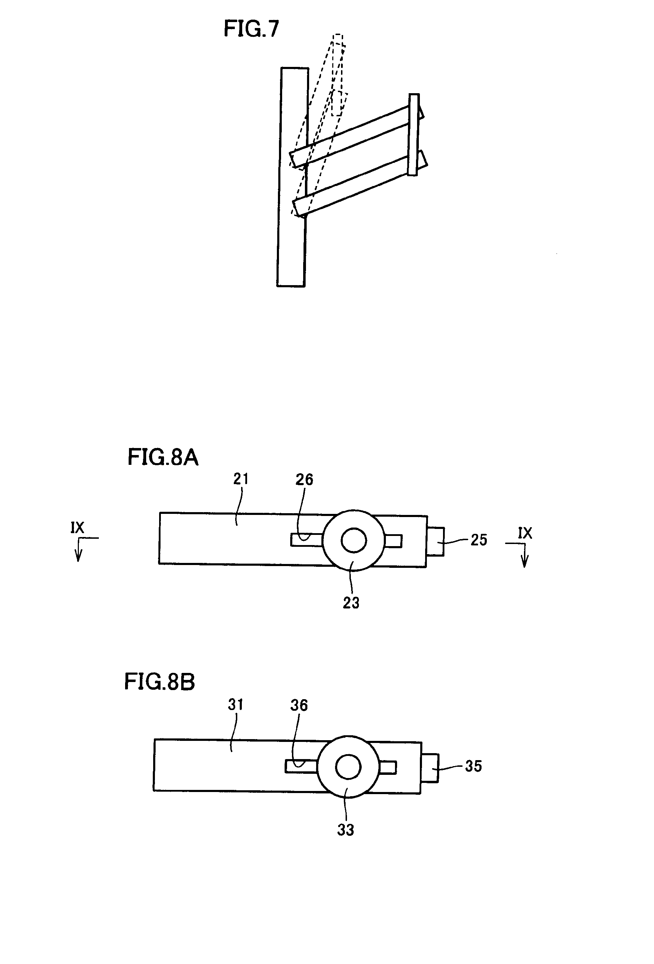

In a case where a parallelogram linkage mechanism including two arms in a simple I shape is constructed as described above, a movable range is restricted as shown in Fig. 7. Namely, as shown with a dashed line in Fig. 7, when the parallelogram linkage mechanism is close to a vertical state (that is, the accommodated state of the support arm), two arms interfere with each other and a completely accommodated state is not attained. Consequently, an effect of forming a foldable support arm (an effect to reduce an installation space) is not sufficiently obtained.

In contrast, according to the support arm in the present embodiment, by combining the two L-shaped arms with each other, first parallelogram linkage mechanism 20 and second parallelogram linkage mechanism 30 can be completely vertical in the accommodated state of the support arm as shown in Fig. 5. Consequently, an effect of forming a foldable support arm (an effect to reduce an installation space) can sufficiently be obtained.

Though an example where arms 21, 22 constructing first parallelogram linkage mechanism 20 and arms 31, 32 constructing the second parallelogram linkage mechanism are identical in shape is shown in the present embodiment, the shape of arms 21, 22 (a first shape) may be different from the shape of arms 31, 32 (a second shape).

The disclosure described above is summarized as follows. Namely, support arm 1 according to the present embodiment includes base 10, intermediate member 40A, tip end member 40B, first parallelogram linkage mechanism 20 provided between base 10 and intermediate member 40A and including first arm 21 and second arm 22, and second parallelogram linkage mechanism 30 provided between intermediate member 40A and tip end member 40B and including third arm 31 and fourth arm 32. First arm 21, second arm 22, third arm 31, and fourth arm 32 are each formed in the L shape.

First arm 21 has base portion 21A constructed by the short-side portion of the L shape and serving as a "first base portion" pivotably connected to base 10 and tip end portion 21B constructed by the long-side portion of the L shape and serving as a "first tip end portion" pivotably connected to intermediate member 40A. Second arm 22 has base portion 22A constructed by the short-side portion of the L shape and serving as a "second base portion" pivotably connected to intermediate member 40A and tip end portion 22B constructed by the long-side portion of the L shape and serving as a "second tip end portion" pivotably connected to base 10. Tip end portion 21B and tip end portion 22B are provided to be opposed in a vertical direction to base portion 22A and base portion 21A, respectively.

First parallelogram linkage mechanism 20 includes pulley 23 fixed to first arm 21 and elastic member 24 fixed to base 10 and intermediate member 40A. Elastic member 24 is provided to reach fixation portion 24B serving as a "second end portion" provided in a portion in intermediate member 40B where first arm 21 is connected from fixation portion 24A serving as a "first end portion" provided on base 10 around pulley 23.

Third arm 31 has base portion 31A constructed by the short-side portion of the L shape and serving as a "third base portion" pivotably connected to intermediate member 40A and tip end portion 31B constructed by the long-side portion of the L shape and serving as a "third tip end portion" pivotably connected to tip end member 40B. Fourth arm 32 has base portion 32A constructed by the short-side portion of the L shape and serving as a "fourth base portion" pivotably connected to tip end member 40B and tip end portion 32B constructed by the long-side portion of the L shape and serving as a "fourth tip end portion" pivotably connected to intermediate member 40A. Tip end portion 31B and tip end portion 32B are provided to be opposed in a vertical direction to base portion 32A and base portion 31A, respectively.

Second parallelogram linkage mechanism 30 includes pulley 33 serving as a "second pulley" fixed to fourth arm 32 and elastic member 34 serving as a "second elastic member" fixed to intermediate member 40A and tip end member 40B. Elastic member 34 is provided to reach fixation portion 34B serving as a "fourth end portion" provided in a portion of tip end member 40B where fourth arm 32 is connected from fixation portion 34A serving as a "third end portion" provided on intermediate member 40A around pulley 33.

It is noted that a direction in which tip end portion 21B and tip end portion 22B are opposed to base portion 22A and base portion 21A respectively is not limited to the vertical direction and it may be, for example, a lateral direction. Similarly, a direction in which tip end portion 31B and tip end portion 32B are opposed to base portion 32A and base portion 31A respectively is not limited to the vertical direction and it may be, for example, a lateral direction.

In addition, it is not that pulley 23, 33 is attached only to first arm 21 or fourth arm 32, but a pulley may be attached also to second arm 22 and third arm 31.

(First Variation)

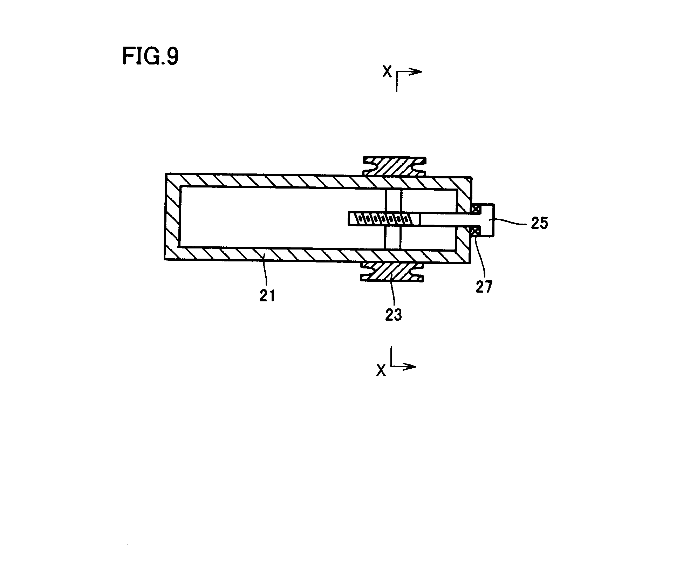

A first variation of the support arm according to the present embodiment will now be described with reference to Figs. 8A to 11.
As shown in Fig. 8A, first arm 21 has an adjustment hole 26 (elongated hole) extending in a direction in which first arm 21 extends. Pulley 23 is attached on adjustment hole 26. As shown in Fig. 9 (a cross-sectional view along IX-IX in Fig. 8A), first arm 21 has an adjustment member 25 (a bolt). A bearing 27 is interposed between first arm 21 and bolt 25, so that bolt 25 can smoothly be turned. By turning bolt 25, two pulleys 23 provided on respective opposing sides in a direction of width of first arm 21 move in the direction in which first arm 21 extends (that is, a direction in which adjustment hole 26 extends).
As described above, for gravity compensation, pulley 23 should be provided such that the center of pulley 23 is located on the straight line connecting the pivot center of first arm 21 with respect to base 10 (the black circle in Fig. 5) and the pivot center of first arm 21 with respect to intermediate member 40A (similarly, the black circle in Fig. 5) to each other. In contrast, according to the support arm in the present embodiment, above-described adjustment member 25 and adjustment hole 26 serving as the "adjustment mechanism" are provided so that a position of pulley 23 on first arm 21 can readily be adjusted and hence adjustment of a position of pulley 23 for gravity compensation can be made in a simplified manner.
It is noted that, as shown in Fig. 8B, a "second adjustment mechanism" adjustment hole 36 (naturally, also an adjustment member) may be provided also in fourth arm 32 to which pulley 33 is attached, as in first arm 21.

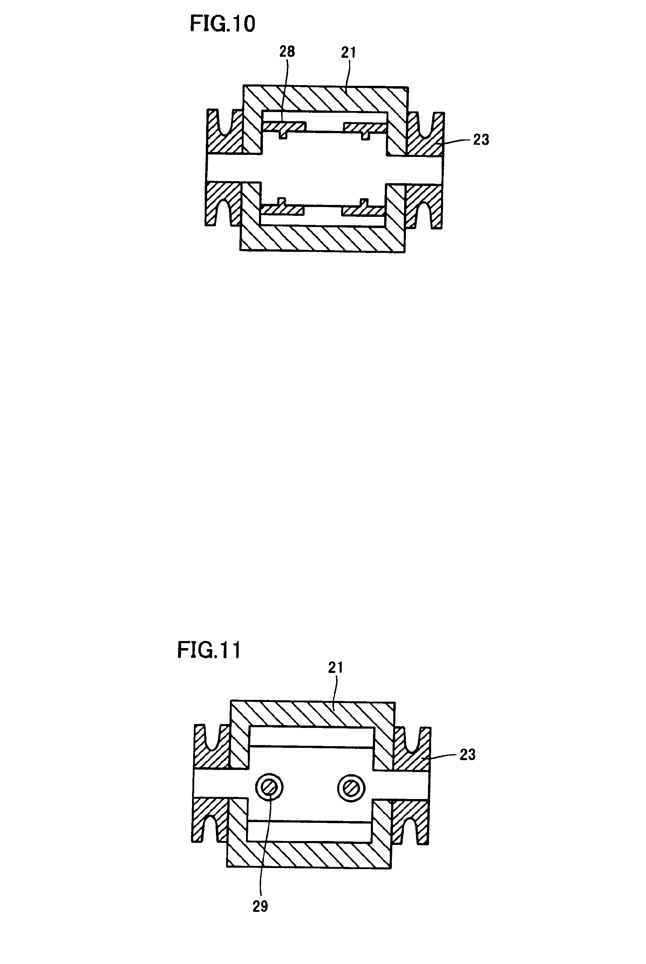

Fig. 10 is a cross-sectional view along X-X in Fig. 9. As shown in Fig. 10, a guide portion 28 guiding movement of pulley 23 in a direction in which the arm extends (the direction of the long-side of the L shape) is provided. Thus, displacement of left and right pulleys 23 in adjustment of a position of pulleys 23 can be suppressed. It is noted that the guide portion may be in such a shape as that of a guide portion 29 shown in Fig. 11.

(Second Variation)

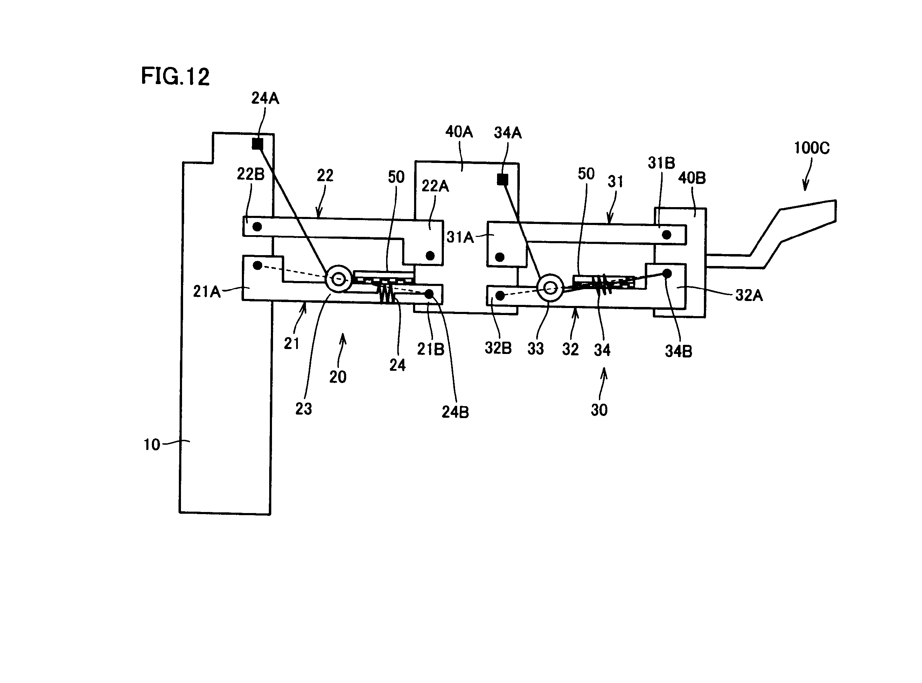

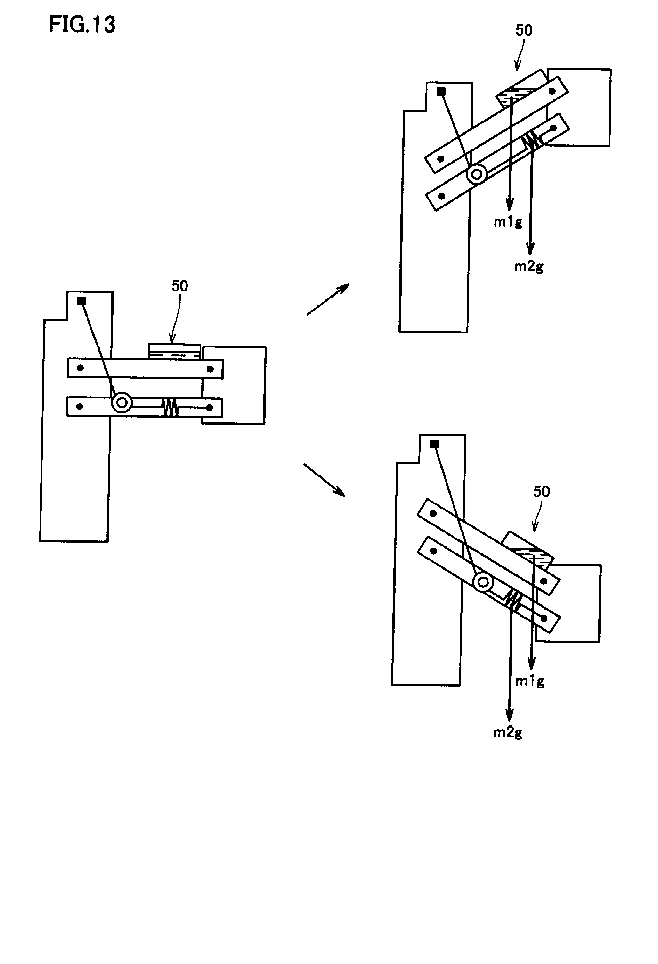

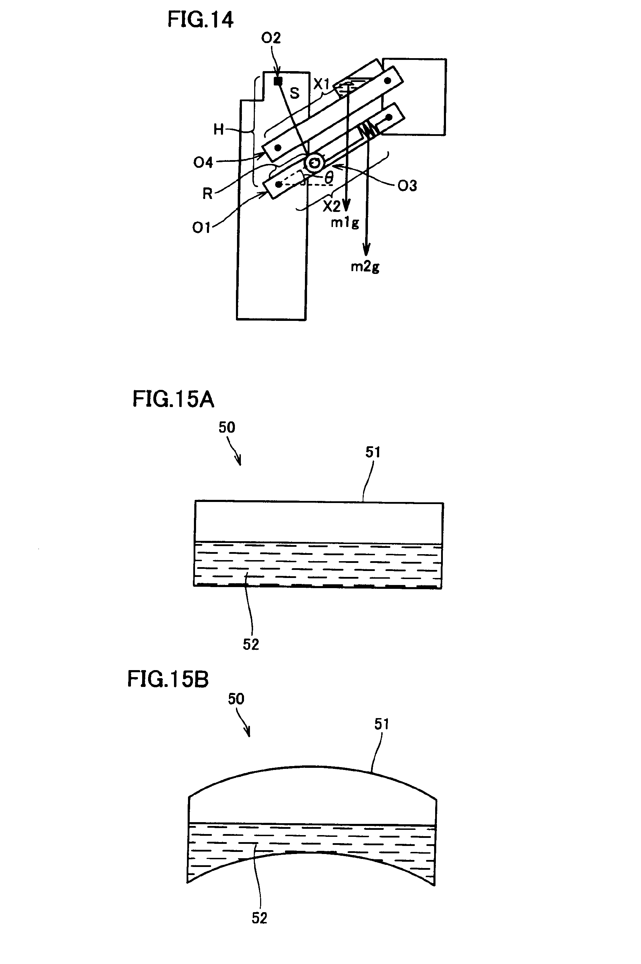

A second variation of the support arm according to the present embodiment will now be described with reference to Figs. 12 to 15. As shown in Fig. 12, the support arm according to the present variation is characterized by providing a gravity center adjustment member 50 in each of first parallelogram linkage mechanism 20 and second parallelogram linkage mechanism 30. Gravity center adjustment member 50 has such a structure that a liquid is accommodated in a housing.
Referring to Fig. 13, in a state where the arms of the parallelogram linkage mechanism are horizontal (that is, in the "used state"), a position of gravity center of the elastic member and a position of gravity center of gravity center adjustment member 50 coincide with each other in the horizontal direction (a state on the left in Fig. 13). When the arms pivot vertically from this state, the gravity center of the elastic member and the gravity center of gravity center adjustment member 50 are displaced in directions opposite to each other (arrows "m1g", "m2g" in Fig. 13 indicating gravity acting on each of the elastic member and gravity center adjustment member 50).
Thus, gravity center adjustment member 50 has a function to cancel displacement of the gravity center of the elastic member due to pivoting of the arms of the parallelogram linkage mechanism. Consequently, regardless of a state of pivot of the arms, complete gravity compensation at all positions can be achieved. By way of example, the first to fourth arms each have a length from 1 to 2 m and a weight of approximately 2 kg, and the elastic member has a weight of approximately 1 kg. Therefore, displacement of the gravity center due to pivoting of the arms affects gravity compensation and cancellation of displacement of the gravity center by means of gravity center adjustment member 50 is technically significant.
From a different point of view, by providing gravity center adjustment member 50 movably along a direction of the long side of the arm, gravity center adjustment member 50 can be moved to positively pivot the arms. Therefore, the arms can also be set from the used state to the accommodated state simply by moving gravity center adjustment member 50.
For the sake of convenience of illustration, Fig. 13 shows an arm of the parallelogram linkage mechanism not in the L shape but in the I shape, however, the arm in the L shape can naturally achieve an effect exactly the same as above. In addition, for the sake of convenience of illustration again, Fig. 13 shows only a single parallelogram linkage mechanism, however, gravity center adjustment member 50 is provided in both of first parallelogram linkage mechanism 20 and the second parallelogram linkage mechanism as described above.
Referring to Fig. 14, in order to realize "complete gravity compensation" described above, gravity center adjustment member 50 should be designed such that H representing a distance between fulcrums O1 and 02 shown in Fig. 14, R representing a distance between fulcrums O1 and 03, S representing a distance between fulcrums 02 and 03, x1 representing a distance between fulcrum 04 and a position of gravity center of gravity center adjustment member 50, x2 representing a distance between fulcrum O1 and a position of gravity center of the elastic member, m1 representing a mass of gravity center adjustment member 50, m2 representing a mass of the elastic member, and θ representing an angle of the arm with respect to the horizontal line satisfy relation below.

Initially, in a state where the parallelogram linkage mechanism is horizontal, gravity center adjustment member 50 is attached such that x1 is equal to x2. It is assumed that x1, x2 here are denoted as A.

Unless moment of force applied to the fulcrum varies in spite of variation in angle θ of the arm with respect to the horizontal line, displacement of gravity center of the elastic member is successfully canceled. Therefore, the following Equation 1 should only be satisfied.

[Equation 1]

$$(m1+m2)gA = (m1x1+m2x2)g\cos\theta$$

Here, when setting as m1 = m2 is made, Equation 2 below is obtained. Equation 2 as organized with regard to x1 will be Equation 3.

[Equation 2]

$$2A = (x1+x2)\cos\theta$$

[Equation 3]

$$x1 = \frac{2A}{\cos\theta} - x2$$

Here, extension of the elastic member is adjusted to S. Therefore, x2 is expressed in the following Equation 4. Substituting Equation 4 in Equation 3, Equation 5 is obtained.

[Equation 4]

$$x2 = A + \frac{\sqrt{H^2+R^2}-S}{2}$$

[Equation 5]

$$x1 = \frac{2A}{\cos\theta} - A - \frac{\sqrt{H^2+R^2}-S}{2}$$

Namely, the gravity center adjustment member should only be designed such that Equation 5 is satisfied.

It is noted that gravity center adjustment member 50 is constructed such that a liquid 52 is accommodated in a case 51 as shown in Fig. 15A. Thus, when the arm is inclined, the gravity center of the gravity center adjustment member is displaced. It is noted that, when an amount of displacement of the gravity center of gravity center adjustment member 50 is desired to be greater, such a variation that case 51 is extended in a lateral direction in Fig. 15A or a bottom of case 51 at the central position of case 51 is raised as shown in Fig. 15B is possible. By doing so, a larger amount of liquid flows in a direction of inclination of the arm.

It is noted that gravity center adjustment member 50 may be attached to a lower arm in first parallelogram linkage mechanism 10 and second parallelogram linkage mechanism 20 as shown in Fig. 12 or to an upper arm as shown in Figs. 13, 14. In an example where the gravity center adjustment member is attached to the lower arm, load imposed on the upper arm can be reduced and the upper arm can be smaller in thickness and lighter in weight.

(Third Variation)

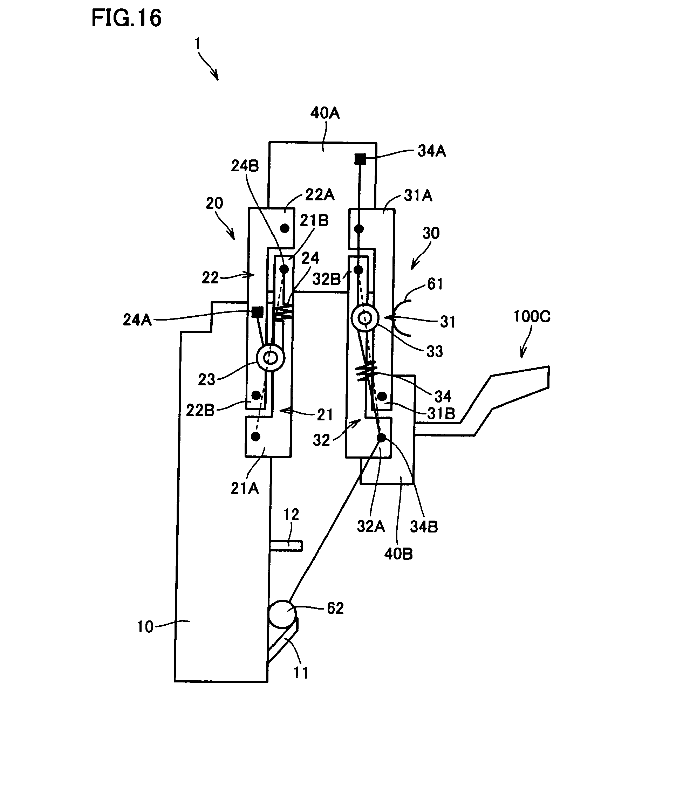

A third variation of the support arm according to the present embodiment will now be described with reference to Figs. 16 to 19. As shown in Figs. 16 to 19, the support arm according to the present variation is characterized by providing an accommodation assistance mechanism 60 assisting an operation for accommodating the support arm.

Accommodation assistance mechanism 60 includes a weight member 62 connected to tip end member 40B, a first carrier portion 11 and a second carrier portion 12 each of which can carry weight member 62, and a carrier 61 provided on second parallelogram linkage mechanism 20 and serving as a "third carrier portion" capable of carrying weight member 62.

Fig. 16 shows a state in which the support arm according to the present variation is accommodated. In this state, weight member 62 is carried on first carrier portion 11.

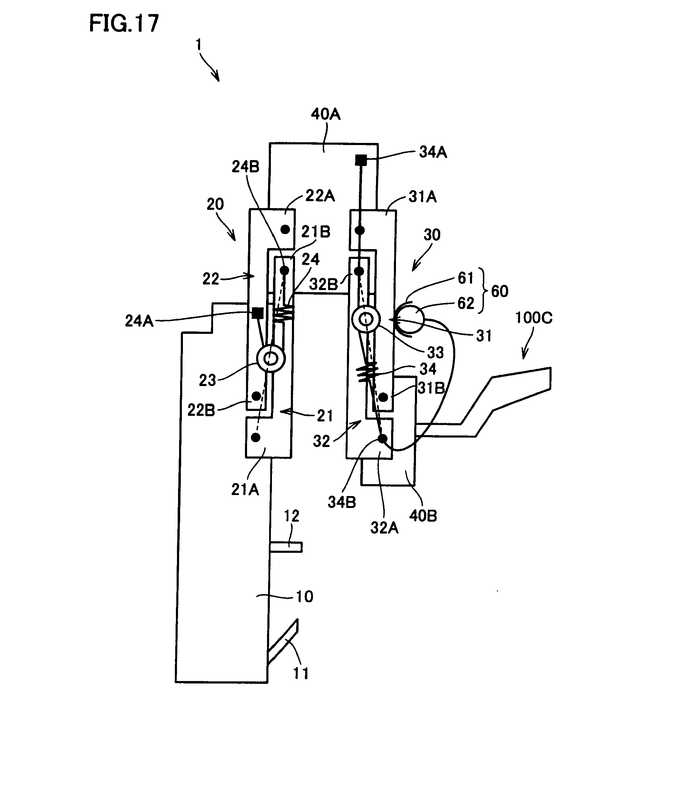

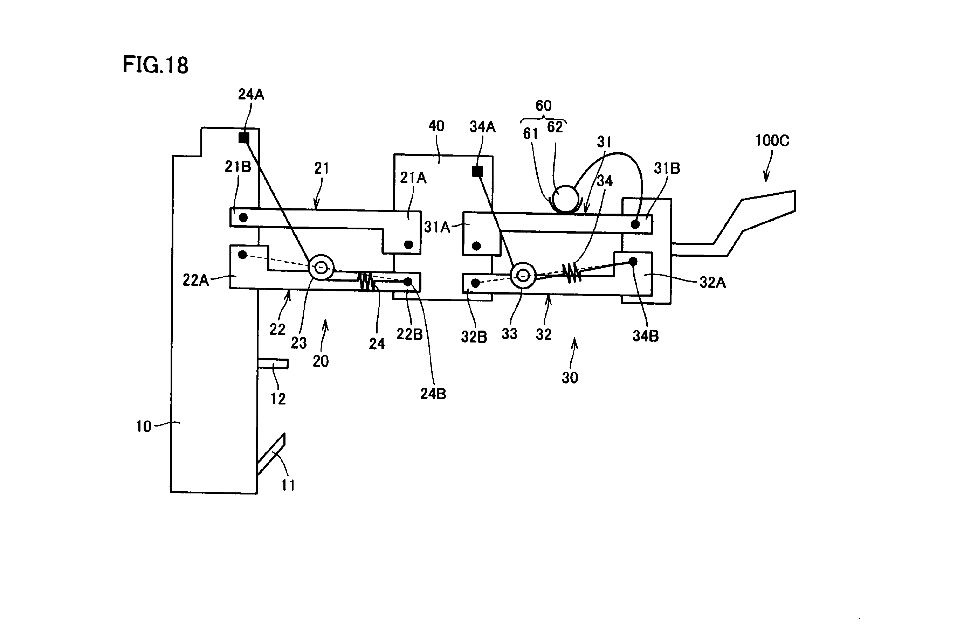

Fig. 17 is a diagram showing a state in which transition from the accommodated state to the used state of the support arm is made. As shown in Fig. 17, by moving weight member 62 from first carrier portion 11 to carrier 61, first parallelogram linkage mechanism 10 and second parallelogram linkage mechanism 20 enter the horizontal state as shown in Fig. 18. This state is the used state of the support arm.

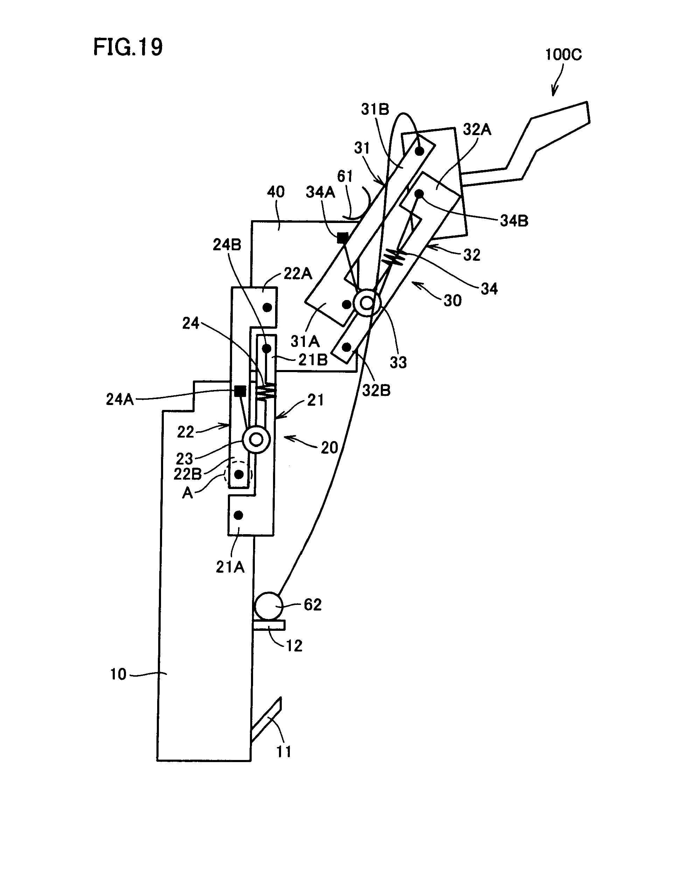

Then, as shown in Fig. 19, weight member 62 is moved from carrier 61 to second carrier portion 12. Thus, tip end member 40B and charge connector 100C enter such a state as being lifted upward. Here, the fulcrum of first parallelogram linkage mechanism 10 on base 10 side is locked. Thereafter, by moving weight member 62 to the first carrier portion, the state returns to the state in Fig. 16 (the state where the support arm is accommodated).

According to the support arm in the present variation, the support arm can return from the used state to the accommodated state with such a simple operation as relocating weight member 62. Therefore, the support arm being left in the used state after charge connector 100C is used can be suppressed.

Though the embodiments of the present invention have been described above, it should be understood that the embodiments disclosed herein are illustrative and non-restrictive in every respect. The scope of the present invention is defined by the terms of the claims, and is intended to include any modifications within the scope and meaning equivalent to the terms of the claims.

INDUSTRIAL APPLICABILITY

The present invention is applicable to a support arm supporting a charge connector for a hybrid vehicle or the like.

REFERENCE SIGNS LIST

1 support arm; 10 base; 11 first carrier portion; 12 second carrier portion; 20 first parallelogram linkage mechanism; 21 first arm; 21A, 22A, 31A, 32A base portion; 21B, 22B, 31B, 32B tip end portion; 22 second arm; 23, 33 pulley; 24, 34 elastic member; 24A, 24B, 34A, 34B fixation portion; 25 adjustment member (bolt); 26 adjustment hole (elongated hole); 27 bearing; 28, 29 guide portion; 31 third arm; 32 fourth arm; 40A intermediate member; 40B tip end member; 50 gravity center adjustment member; 51 casing; 52 liquid; 60 accommodation assistance mechanism; 61 carrier; and 62 weight member.

**Claims**

**1.** A support arm, comprising:

a base (10);
an intermediate member (40A);
a tip end member (40B);
a first parallelogram linkage mechanism (20) provided between said base (10) and said intermediate member (40A) and including a first arm (21) and a second arm (22); and
a second parallelogram linkage mechanism (30) provided between said intermediate member (40A) and said tip end member (40B) and including a third arm (31) and a fourth arm (32),
said first arm (21), said second arm (22), said third arm (31), and said fourth arm (32) each being formed in an L shape,
said first arm (21) having a first base portion (21A) constructed by a short-side portion of said L shape and pivotally connected to said base (10) and a first tip end portion (21B) constructed by a long-side portion of said L shape and pivotally connected to said intermediate member (40A),
said second arm (22) having a second base portion (22A) constructed by a short-side portion of said L shape and pivotally connected to said intermediate member (40A) and a second tip end portion (22B) constructed by a long-side portion of said L shape and pivotally connected to said base (10),
said first tip end portion (21B) and said second tip end portion (22B) being provided to be opposed to said second base portion (22A) and said first base portion (21A), respectively,
said third arm (31) having a third base portion (31A) constructed by a short-side portion of said L shape and pivotally connected to said intermediate member (40A) and a third tip end portion (31B) constructed by a long-side portion of said L shape and pivotally connected to said tip end member (40B),
said fourth arm (32) having a fourth base portion (32A) constructed by a short-side portion of said L shape and pivotally connected to said tip end member (40B) and a fourth tip end portion (32B) constructed by a long-side portion of said L shape and pivotally connected to said intermediate member (40A), and
said third tip end portion (31B) and said fourth tip end portion (32B) being provided to be opposed to said fourth base portion (32A) and said third base portion (31A), respectively.

**2.** The support arm according to claim 1, wherein said first parallelogram linkage mechanism (20) includes a pulley (23) fixed to said first arm (21) or said second arm (22) and an elastic member (24) fixed to said base (10) and said intermediate member (40A),
said elastic member (24) is provided to reach a second end portion (24B) provided on said intermediate member (40A) from a first end portion (24A) provided on said base (10) around said pulley (23), and
said first arm (21) has an elongated hole (26) formed in said long-side portion of said L shape along a direction in which the long-side portion extends and an adjustment mechanism (25) capable of fixing said pulley (23) to said elongated hole (26) and adjusting a position of said pulley (23) along a longitudinal direction of said elongated hole (26).

**3.** The support arm according to claim 2, wherein said adjustment mechanism (25) includes a guide portion (28, 29) guiding said pulley (23) in a direction of the long side of said L shape when the position of said pulley (23) is to be adjusted.

**4.** The support arm according to claim 2 or 3, wherein said second parallelogram linkage mechanism (30) includes a second pulley (33) fixed to said third arm (31) or said fourth arm (32) and a second elastic member (34) fixed to said intermediate member (40A) and said tip end member (40B),

said second elastic member (34) is provided to reach a fourth end portion (34B) provided on said tip end member (40B) from a third end portion (34A) provided on said intermediate member (40A) around said pulley (33), and

said third arm (31) has a second elongated hole (36) formed in said long-side portion of said L shape along a direction in which the long-side portion extends and a second adjustment mechanism (35) capable of fixing said second pulley (33) to said second elongated hole (36) and adjusting a position of said second pulley (33) along said second elongated hole (36).

5. The support arm according to claim 1, wherein said first parallelogram linkage mechanism (20) includes a first elastic member (24) fixed to said base (10) and said intermediate member (40A) and a first gravity center adjustment member (50) attached to said first arm (21) or said second arm (22),

said second parallelogram linkage mechanism (30) includes a second elastic member (34) fixed to said intermediate member (40A) and said tip end member (40B) and a second gravity center adjustment member (50) attached to said third arm (31) or said fourth arm (32),

said first gravity center adjustment member (50) and said second gravity center adjustment member (50) each have a housing (51) and a liquid (52) accommodated in the housing (51), and

while said first parallelogram linkage mechanism (20) and said second parallelogram linkage mechanism (30) are horizontal, a position of gravity center of said first elastic member (24) and a position of gravity center of said first gravity center adjustment member (50) coincide with each other in a horizontal direction and a position of gravity center of said second elastic member (34) and a position of gravity center of said second gravity center adjustment member (50) coincide with each other in the horizontal direction.

6. The support arm according to claim 5, wherein said first gravity center adjustment member (50) is attached to an arm located lower, of said first arm (21) and said second arm (22), and

said second gravity center adjustment member (50) is attached to an arm located lower, of said third arm (31) and said fourth arm (32).

7. The support arm according to claim 5 or 6, wherein said first gravity center adjustment member (50) and said second gravity center adjustment member (50) are provided movably along a direction of the long side of said L shape.

8. The support arm according to claim 1, further comprising an accommodation assistance mechanism (60) assisting an operation for accommodating said support arm, wherein

said accommodation assistance mechanism (60) includes a weight member (62) connected to said tip end member, a first carrier portion (11) and a second carrier portion (12) each capable of carrying said weight member (62), and a third carrier portion (61) provided on said second parallelogram linkage mechanism (30) and capable of carrying said weight member (62), and

while said support arm is accommodated, said weight member (62) is carried on said first carrier portion (11), said first parallelogram linkage mechanism (20) and said second parallelogram linkage mechanism (30) enter a horizontal state by moving said weight member (62) from said first carrier portion (11) to said third carrier portion (61), and said support arm enters an accommodated state by moving said weight member (62) from said third carrier portion (61) to said second carrier portion (62) and thereafter further moving said weight member (62) to said first carrier portion (11).

FIG.1

FIG.2

FIG.3

**FIG.4**

FIG.5

FIG.6

**FIG.7**

**FIG.8A**

21 26

IX

25

23

**FIG.8B**

31 36

35

33

FIG.9

FIG.10

FIG.11

FIG.12

FIG.13

50

m1g

m2g

50

50

m1g

m2g

## FIG.14

## FIG.15A

## FIG.15B

FIG.16

**FIG.17**

FIG.18

FIG.19

| INTERNATIONAL SEARCH REPORT | International application No. |
|---|---|
| | PCT/JP2010/057551 |

**A. CLASSIFICATION OF SUBJECT MATTER**
*B66F19/00*(2006.01)i

According to International Patent Classification (IPC) or to both national classification and IPC

**B. FIELDS SEARCHED**

Minimum documentation searched (classification system followed by classification symbols)
B66F19/00

Documentation searched other than minimum documentation to the extent that such documents are included in the fields searched
Jitsuyo Shinan Koho          1922–1996    Jitsuyo Shinan Toroku Koho    1996–2010
Kokai Jitsuyo Shinan Koho    1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-89090 A  (The Circle for the promotion of science and engineering), 25 March 2003 (25.03.2003), paragraphs [0007] to [0015]; fig. 1 to 5 (Family: none) | 1-8 |
| A | JP 6-155361 A  (Mitsubishi Nagasaki Machinery Mfg. Co., Ltd.), 03 June 1994 (03.06.1994), paragraphs [0012] to [0022]; fig. 1 (Family: none) | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2010 (06.10.10) | 19 October, 2010 (19.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003181789 A

- JP 2003089090 A